# EUROPÄISCHE PATENTANMELDUNG

(11) **EP 1 713 309 A2**
(43) Veröffentlichungstag der Anmeldung: **18.10.2006**
(21) Anmeldenummer: 06007614.8
(22) Anmeldetag: 11.04.2006
(51) Int. Cl.: H05B 41/292

(54) **Schaltung und Verfahren zum Betreiben von Miniatur-Hochdruck-Kurzbogenlampen mit Wechselstrom**

(30) Priorität: 11.04.2005 DE 202005005791 U
(71) Anmelder: Nucon GbR, 21244 Buchholz (DE)
(72) Erfinder: Niggemeyer, Gert G., 21244 Buchholz (DE); Niggemeyer, Jörg, Dipl.-Phys., 21244 Buchholz (DE)
(74) Vertreter: Grünecker, Kinkeldey, Stockmair & Schwanhäusser Anwaltssozietät

(57) **Zusammenfassung**

Die Erfindung bezieht sich auf eine Schaltung und ein Verfahren zum Erzeugen und Betreiben des Plasmas von Hochdruck-Kurzbogenlampen kleinster Abmessungen mit Wechselstrom. Dieser Betrieb ist besonders kritisch, weil es nach dem Polaritätswechsel des Stromes zum Verlöschen des Lichtbogens kommen kann. Bei dem Verfahren wird durch die Dimensionierung geeigneter Betriebsparameter einer Halbbrückenverstärkerschaltung und durch zusätzliche wenige Schaltungselemente ein Lampenspannungsverlauf erreicht, der ein Verlöschen des Bogens unter allen Betriebsparametern verhindert. Es wird für jede Spannungshalbwelle an der Lampe ein pulsierender sägezahnähnlicher Verlauf geformt, der mit nahezu doppelt hoher Amplitude beginnt und bis zum Ende der Halbwelle zeitlich abklingt. Nur im Falle eines kurzeitigen Verlöschens des Lichtbogens erfolgt ein augenblicklich überlagerter Spannungsimpuls, der eine sofortige Wiederzündung des Bogens bewirkt. Miniaturhochdrucklampen, die bislang nur mit Gleichstrom betrieben werden konnten, können somit neuerdings auch mit den Vorteilen des Wechselstromes betrieben werden.

## Beschreibung

Die Erfindung bezieht sich auf eine Schaltung und ein Verfahren zum Erzeugen und Betreiben des Plasmas von Hochdruck-Kurzbogenlampen kleiner Abmessungen. Hochdruck-Kaltkathoden-Gasentladungslampen, wie sie z.B. auch in Fahrzeugscheinwerfern verwendet werden, benötigen besondere Schaltungen zum Zünden und dem daran anschließenden stabilen Betrieb des Lichtbogens. Der Betrieb mit Wechselstrom bewirkt, dass der Bogen gleichmäßig verteiltes weißes Licht abgibt. Außerdem ist der Wechselstrombetrieb von Gasentladungslampen in Fahrzeugscheinwerfern für eine höhere Lebensdauer erwünscht.

Beim Wechselstrombetrieb erfolgt bei dem Wechsel der Polarität, dem sogenannten Nulldurchgang, eine kritische Betriebsphase bei der die Lampe verlöschen kann, sofern die Summe aus Spannungsabfall über die Bogenstrecke und über beide Elektroden-Plasma-Übergangszonen größer ist als die von außen angelegte Lampenbetriebsspannung des Vorschaltgerätes.

Aufgabe der Erfindung ist es, ein Plasma in einer Bogenlampe kleiner Abmessungen zu erzeugen und beim Betrieb mit Wechselstrom zu verhindern, dass nach dem Polaritätswechsel des Lampenstromes der Lichtbogen abreißt und die Lampe verlischt.

Bei der Schaltung und dem Verfahren der genannten Art ist diese Aufgabe durch die in den Patentansprüchen angegebenen Merkmale gelöst.

Die erfindungsgemäße Schaltung zeichnet sich dadurch aus, dass der Effektivwert der das Plasma speisenden Wechselspannunng der Gleichspannung einer vorbestimmten Leistung entspricht, die im zeitlichen Mittel konstant gehalten wird.

Die erfindungsgemäße Schaltung und das entsprechende Verfahren unterscheidet sich von bestehenden Systemen darin, dass die an dem Lichtbogen anliegende Spannung bei jeder Halbwelle eine starke Überhöhung des Anstieges aufweist, die zudem auch sprunghaft ansteigen kann, falls der Stromfluss nach dem Nulldurchgang über die Lampe unterbrochen werden sollte, wodurch wiederum die Belastung durch den Lichtbogen zusammenbricht aber durch diesen extrem schnellen sprunghaften Spannungsanstieg, mit Neuzündung des Bogens, der Stromfluss über die Lampe aufrecht erhalten wird obwohl die geregelte Gleichspannungsquelle auf diesen Vorgang wegen ihrer Regelträgheit nicht reagieren kann.

Die grundlegenden Prinzipien eines elektronischen Vorschaltgerätes werden wie folgt weiter verwendet:
Die vom Wechselrichter abgegebene Spannung folgt der leistungsbezogen geregelten Gleichspannung des DC-DC Converters.

Zum Zünden des Plasmas addiert eine extra Zündschaltung Hochspannungsimpulse, die die Übernahme des Bogens durch die anliegende Wechselspannung des Wechselrichters ermöglichen und die immer nur dann erzeugt werden, wenn die von der Gleichspannungsquelle abgegebene Gleichspannung einen bestimmten Mindestwert überschreitet, der durch eine Sicherheitsschaltung in seiner Dauer zeitlich begrenzt wird.

Auf diese Weise ergibt sich sowohl für das Zünden als auch das Betreiben der Gasentladungslampe eine einfache Schaltung hoher Leistungsfähigkeit, die insbesondere durch die Regelung der Gleichspannungsquelle nach Maßgabe der dem Plasma zugeführten Leistung erfolgt.

Dieses Schaltungsgrundprinzip wird bereits in unterschiedlichen Ausführungen erfolgreich angewandt die sich dadurch auszeichnet, dass sich der anfänglich sinusähnliche Spannungsverlauf zum Ende der Halbwelle einer trapezähnlichen Kurvenform nähert.

Automobile Xenonlampen werden überwiegend mit rechteckförmiger Wechselspannung betrieben. Bei diesem Prinzip wird das Verlöschen des Lichtbogens vermieden, indem während der Phase des Nulldurchganges eine besonders steile Anstiegsflanke des nächsten Rechteckimpulses die Pause geringen Stromflusses minimiert. Insbesondere deswegen darf die Induktivität der mit der Lampe in Serie liegende Zündspule keinen zu großen Wert annehmen, da hierdurch die Steilheit der Anstiegsflanke eines jeden Rechteckimpulses verringert wird.

Bei den herkömmlichen Prinzipien in Kombination mit der automobilen Bogenlampe vom Typ D2S entstehen keine besonderen Probleme, da die Brennspannung der Lampe im wesentlichen dem Spannungsabfall des Plasmas zwischen den Elektroden entspricht.

Bei einem schnellen Wechsel des Nulldurchganges, wie z.B. bei Rechteckspannung, wird so die unmittelbare vorhandene Lampenbrennspannung in periodischer Umkehr an die Lampe gelegt. Nach Abzug des Spannungsabfalls über beide Elektroden, bleibt noch eine ausreichend große Potentialdifferenz erhalten um einen erneuten Stromfluss in Gegenrichtung unmittelbar und ohne zeitliche Verzögerung zu gewährleisten.

Des Weiteren werden die Elektroden im Brennraum der Lampe durch ihre räumliche Anordnung auf eine ausreichend hohe Betriebstemperatur gehalten, so dass sich der Spannungsabfall an den Elektroden innerhalb der kurzen Zeit des Wechsels nicht kritisch hoch ausbilden kann. Eine hohe Betriebstemperatur der Elektroden senkt die sogenannte Austrittsarbeit der Elektronen aus dem Metall und mindert den Spannungsabfall über die Elektroden.

Dagegen wird das Verhältnis vom Spannungsabfall über beide Elektroden zur Lampenbrennspannung bei Xenonlampen mit sehr kleinen räumlichen Abmessungen, dazu noch verbunden mit geringer elektrischen Leistung wie z.B. nur 21W, sowie bei gleichzeitig verkürztem Elektrodenabstand und des weiteren durch ihre thermisch ungünstige räumliche Anordnung, eine ausreichend hohe Betriebstemperatur für den Betrieb mit Wechselspannung immer ungünstiger. Dies macht ihren Betrieb mit rechteckförmiger Wechselspannung praktisch unmöglich.

Falls die Elektroden baubedingt nur sehr kurz in den Lampenbrennraum hineinragen und zudem sehr dicht an dem begrenzenden Quarzglas des Lampenbrennraums liegen, kann nicht vorhersagbar die Temperatur der Elektroden sinken, bedingt durch die Position oder Bewegung der Lampe.

Bei diesen sehr kleinen Formen von Xenonlampen kann es dadurch sogar schon bei Gleichstrombetrieb zu einem plötzlichen Anstieg der Lampenbrennspannung kommen, der durch die Serieninduktivität der immer vorhandenen Zündspule nicht immer durch eine selbstinduzierte Spannung bei Stromabriss ausgeglichen werden kann und dann zum Verlöschen der Lampe führt.

Der Betrieb mit einem sinusähnlichen Spannungsverlauf ist ebenfalls nicht möglich, da die Zeit bis zum Erreichen des Spannungsscheitelwertes, der gegenüber einer Rechteckspannung um V2 höher liegt, zu lange dauert, da die Induktivität der allgemein in Serie mit der Lampe liegenden Zündspule den Spannungsanstieg zeitlich verzögert.

Aufgabe der Erfindung ist es, durch wenige Schaltungselemente und die Einstellung geeigneter Betriebsparameter einen Spannungsverlauf an der Lampe zu erzielen, der mit jeder Halbwelle mit einer steilen Anstiegsflanke und starken augenblicklichen Spannungsüberhöhungen den Betrieb einer kritischen Kurzbogenlampe mit Wechselstrom ermöglicht.

Das wird erfindungsgemäß dadurch gelöst, dass aus einem sinusähnlichem Spannungsverlauf eines üblichen Serienschwingkreises mit Hilfe eines zusätzlichen zweiten Serienschwingkreises ein pulsierender sägezahnähnlicher Verlauf geformt wird, der mit einer nahezu doppelt so hohen beginnenden Amplitude beginnt, die zum Ende der Halbwelle hin abfällt.

Der Grundwelle des ersten Schwingkreises wird die Spannung des zusätzlichen Schwingkreises überlagert, die auch einen hochohmigen Zustand der Lampe beim Polaritätswechsel überwinden kann, indem die gespeicherte Energie in der Drossel dieses zusätzlichen Schwingkreises zu einem extrem schnellen und hohen Spannungsanstieg an der Lampe führt, falls die Lampe nach dem Polaritätswechsel hochohmig sein sollte. So kann sich unmittelbar nach jedem Polaritätswechsel der Stromfluss durch die Lampe wieder rasch ausbilden und der Lichtbogen bleibt erhalten.

Ausgestaltungen der Erfindung sind in den übrigen Ansprüchen angegeben.

Ein Ausführungsbeispiel der Erfindung wird anhand der schematischen Zeichnungen und Spannungsverläufen innerhalb der Schaltung erläutert.

FIG. 1 zeigt eine bereits bekannte Schaltungsanordnung gebildet aus einer Halbbrückenanordnung mit zwei Transistoren 4 und 5 mit einer Serienschwingkreis bildenden Induktivität der Zündspule 3 im Wechsel mit Kondensator 1 und 2.

FIG. 2 zeigt die Schaltungsanordnung aus FIG. 1 erfindungsgemäß erweitert um einen zweiten Serienschwingkreis gebildet aus einer Induktivität 6, die zusätzlich in Serie zwischen Zündspule 3 und dem Halbbrückenverstärker liegt, und einem Kondensator 7 in Reihe mit dem Widerstand 8, die beide parallel zur Serienanordnung der Lampe 9 mit der Zündspule 3 liegen.

FIG. 3 zeigt den Lampenbrennspannungsverlauf der Schaltungsanordnung von FIG. 2.

FIG. 4 zeigt die Schaltungsanordnung aus FIG. 2 für die anstelle der Lampe 9 jetzt ein elektrischer Lastwiderstand 14 mit einem Wert von 147 Ohm eingefügt ist.

FIG. 5 zeigt Spannungsverläufe innerhalb der Schaltungsanordnung von FIG. 4, die sich mit dem Lastwiderstand von 147 Ohm ergeben.

FIG. 6 zeigt eine Miniatur-Kurzbogenlampe vom Typ 21W H3, deren Brennraum 25 derart kleine Abmessungen hat, dass die Elektroden der Lampe extrem dicht an dem Quarzglas zu liegen kommen und so leicht Temperatur verlieren können.

Die erfindungsgemäße Schaltung und das Verfahren funktionieren im Detail wie folgt:

Ein hier nur schematisch dargestellter Wechselrichter (Inverter) steuert zwei MOSFETS 4 und 5 innerhalb eines Halbbrückenverstärkers derart an, dass der eine Transistor immer erst dann leitend werden kann, wenn der zuvor leitende Transistor vollständig gesperrt ist. Dabei wird vorzugsweise eine potential getrennte Ansteuerung der MOSFETS verwendet.

Ein geregelter DC-DC-Converter, beschrieben in der EP-B-O 301 436 und der US-PS 4 922 396, versorgt den Halbbrückenverstärker mit leistungsbezogener Gleichspannung. Diese Gleichspannung liegt an einem hier nur schematisch angedeuteten kapazitiven Spannungsteiler mit den Kondensatoren 1 und 2, mit jeweils halber negativ gerichteter Gleichspannung neg. HV.

Der DC-DC-Converter wird über eine schematisch angedeutete Leistungsregelschaltung gesteuert, wie sie in der Patentanmeldung DE 196.27989 A1 beschrieben ist. Der DC-DC-Converter gibt seine geregelte negativ gerichtete Ausgangspannung neg. HV an die MOSFETS 1 und 2 des Halbbrückenverstärkers ab.

Der DC-DC-Converter selbst liegt an einer Spannungsversorgungs-Batterie, die ihrerseits die übrigen gezeigten Steuerelemente mit Spannungen versorgt.

Die Anschlusspunkte 10 und 13 des Halbbrückenverstärkers sind über die Speicherdrossel 6 und die Sekundärwicklung des Zündtransformators 3 mit einer Gasentladungslampe 9 verbunden, in der das Plasma gezündet und anschließend betrieben wird.

Die von der Lampe aufgenommene elektrische Leistung wird konstant geregelt.

Die Primärwicklung des Zündtransformators 3 wird von einer Zündschaltung Ignition mit Hochspannungsimpulsen versorgt, wenn der DC-DC-Converter sein Spannungsmaximum zum Starten der Lampe anfänglich zeitlich begrenzt erzeugt.

Der Kurvenverlauf der an den Anschlusspunkten 10 und 13 des Halbbrückenverstärkers anliegenden Wechselspannung wird durch die Dimensionierungen der Kondensatoren 1 und 2, der Induktivität der Zündspule 3, der Induktivität der Speicherdrossel 6 sowie der Frequenz des Inverters maßgeblich bestimmt.

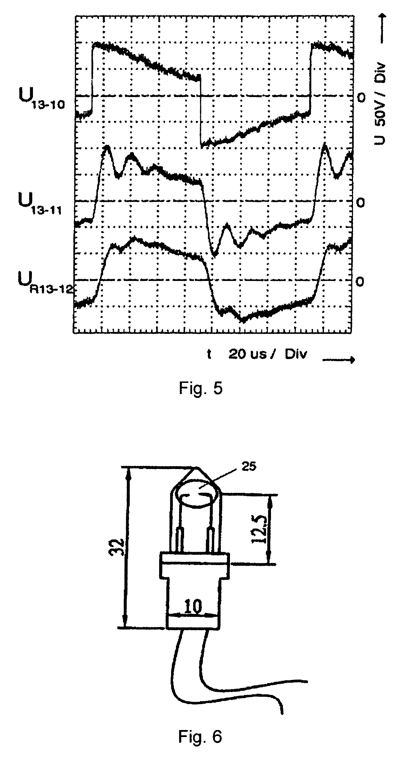

In FIG. 5 werden Messkurven der Spannungsverläufe gezeigt, wobei an Stelle einer Lampe eine ohmsche Last mit zur Lampe äquivalenter Größe eingesetzt wird. Die Ohmsche Belastung wurde gewählt, um die Schaltung mit einen konstanten Verbraucher zu betreiben.

Für die gezeigten Messkurven wurde als ohmsche Last 147 Ohm gewählt, die mit einer Leistung von 21W konstant belastet wird.

Kurve U₁₃₋₁₀ zeigt den differentiellen Spannungsverlauf über die Anschlusspunkte 10 und 13: Es ergibt sich bei einer Frequenz von ca. 6kHz ein sägezahnähnlicher Wechselspannungsverlauf:

Zu Beginn einer jeden positiven oder negativen Halbwelle hat die Amplitude ca. 100V und fällt dann auf einen Wert bis etwas unterhalb 50V ab. Man muss immer rechtzeitig die Polarität wechseln, da der Betrieb der Lampe dies erfordert.

Kurve U₁₃₋₁₁ zeigt den differentiellen Spannungsverlauf über die Messpunkte 11 und 13: Es wird der sägezahnähnlichen Kurve U₁₃₋₁₀ eine Schwingung mit kürzerer Periode überlagert. Die überlagerte Schwingung wird durch einen zweiten zusätzlichen Serienschwingkreis erzeugt, der aus der Speicherdrossel 6 und dem Kondensator 7 gebildet wird. Ein zusätzlicher Serienwiderstand bedämpft diesen Kreis. Gegenüber der Kurve U₁₃₋₁₀ weist Kurve U₁₃₋₁₁ eine geringfügig verzögerte Anstiegsflanke auf.

Kurve U_{R13-12} zeigt den differentiellen Spannungsverlauf über die Messpunkte 12 und 13 mit einem Lastwiderstand von 147 Ohm. Der Spannungsverlauf wird hier durch die sekundäre Induktivität der Zündspule 3 gegenüber Kurve U₁₃₋₁₁ nochmals weiter geglättet. Auch wird jetzt die höchste Amplitude noch später erreicht und so hat es den Anschein, als ob die bisher erreichte steile Anstiegsflanke von Kurve U₁₃₋₁₀ durch diese zusätzliche Schaltungsanordnung wieder reduziert wird.

Im Gegensatz zu einem rein ohmschen Widerstand ist über eine Halbwelle der Widerstand einer Bogenlampe aber stark veränderlich und hängt auch noch kurzzeitig sehr stark von dem gewählten Amplitudenverlauf ab.

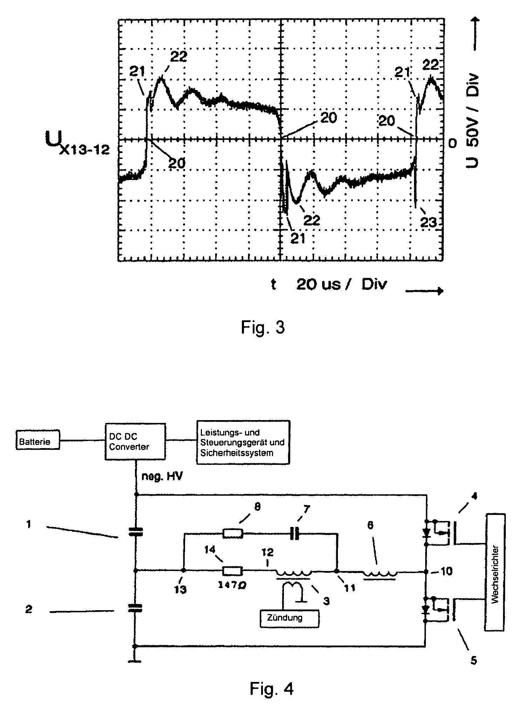

FIG. 3 zeigt den Spannungsverlauf U_{X13-12} über die Messpunkte 12 und 13 einer eben nicht linear ohmschen Xenon-Lampe 9, die sich in einem kritischen Zustand des beinahe Verlöschens befindet, was aber durch die erfindungsgemäße Schaltung verhindert wird:

Nach einem Nulldurchgang 20 würde normalerweise die Lampenbrennspannung bei nicht unterbrochenem Stromfluss über die Lampe nur langsam ansteigend auf das Maximum bei 22 zulaufen. Die Lampe wird jedoch sehr hochohmig, was jetzt die vom Vorschaltgerät abgegebene Spannung auf einen Wert, der bis zu 120V erreicht, mit extremer Anstiegsflanke ansteigen lässt 21 und eine erneute, augenblickliche Übernahme des Lichtbogens bewirkt. Die durchschnittliche Lampenbrennspannung der gemessenen Lampe beträgt jedoch eigentlich nur ca. 65V. Der darauf unmittelbar folgende Kurvenabschnitt 22 sieht dann ähnlich aus wie Kurve U₁₃₋₁₁ und hat überraschenderweise wenig Ähnlichkeit oder Übereinstimmung mehr mit Kurve U_{R13-12}.

Der Grund ist, dass eine Xenonlampe ihren Widerstand je nach dem momentanen Stromverlauf einer Halbwelle ändert. So ist der Widerstand einer Xenonlampe bei einer geringen Stromstärke höher als bei nominaler Stromstärke. Bei höheren Stromstärken dagegen nimmt der Widerstand ab. Der durchschnittliche Widerstand der Lampe steigt mit zunehmender Temperatur weil der innere Gasdruck steigt.

Das hat z.B. zu Konsequenz, dass der Lampenwiderstand bei reduzierter Leistung größer wird, so dass die Brennspannung der Lampe ansteigt, obwohl man die Leistung verringert. Nur eine ausgefeilte Regelschaltung kann bei diesem ungewöhnlichen Verhalten die Leistung der Lampe konstant und stabil betreiben.

Wenn bei einer Miniatur-Xenonlampe ein Verlauf der Amplitude gewählt wird, die zeitlich nicht konstant, wie z.B. eine Sinusspannung ist, dann hat das die Konsequenz, dass während der absteigenden Amplitude von Strom und Spannung ab einer minimalen Amplitude der Spannung die Lampe schon verlöschen kann, d.h. kein Strom mehr fließt und erst nach dem Wechsel der Polarität erneut zündet, siehe auch Fig.3 - 23 .

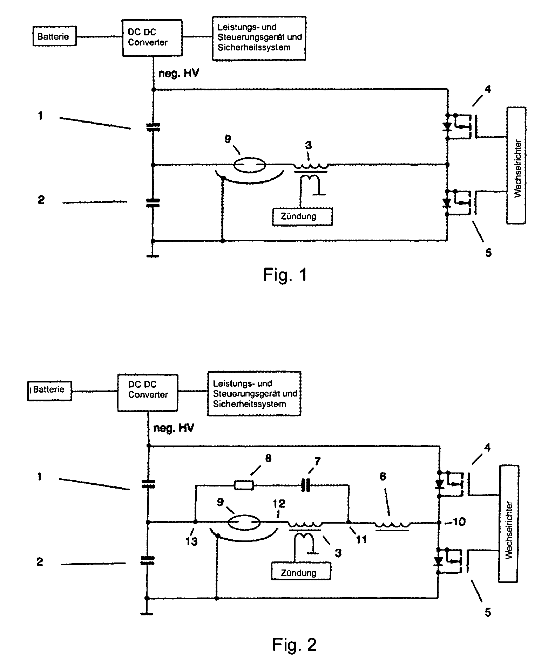

Bei sinusförmigen oder zu langsam ansteigenden Spannungsverläufen wie sie sich aus Schaltungen wie FIG. 1 ergeben, folgt der ansteigende Spannungsverlauf im Wesentlichen unbeeinflusst von der augenblicklichen Stromentnahme. Die Lampe kann ungehindert verlöschen, weil die zwischengespeicherte Energie fehlt, vor dem Scheitelwert 22 eine Spannungsüberhöhung 21 zu erzeugen.

Für den Fall, dass der Bogen unmittelbar nach dem Nulldurchgang verlöschen sollte, ist die erfindungsgemäße Schaltung so ausgelegt, dass es zu einer Spannungsüberhöhung 21 mit extremer Flankensteilheit kommen kann, weil durch zusätzliche Schaltungselemente eine zweite Speicherinduktivität 6 bei jedem Polaritätswechsel mit Energie aufgeladen wird, deren Energie im Bedarfsfall sofort für eine Spannungsüberhöhung sorgt.

Bei der Schaltung aus FIG. 2 ist anhand der Kurven aus FIG. 3 zu erkennen, dass der als erste Spannungsquelle dienende Wechselrichter, gebildet aus Transistoren 4 und 5 , an seinem Ausgang gemessen über die Lampe zwischen den Punkten 13 und 10 schon eine deutliche Spannungsüberhöhung mit entsprechender Flankensteilheit liefert.

Solch einen Spannungsverlauf wird man jedoch direkt an einer Entladungsstrecke nicht erreichen können, da nur durch die zusätzlichen Induktivitäten der Zündspule 3 und Drossel 6 sich dieser Verlauf ergibt.

Die Induktivität der Zündspule 3 ist einerseits notwendig, weil sie als Drossel einem ungehinderten Entladestrom über die Lampe entgegenwirkt andererseits ist die Induktivität der Zündspule ungünstig, weil sie einem sehr schnellen Spannungsanstieg an der Lampe bei einem Nulldurchgang entgegensteht.

Abhilfe aus diesem Widerspruch hilft hier erfindungsgemäß ein zusätzlicher, zweiter der Lampe parallel geschalteter Serienschwingkreis, der aus der Speicherdrossel 6 Kondensator 7 und Dämpfungswiderstand 8 besteht.

Wenn der Wechselrichter umschaltet, wird als erstes die Drossel 6 aufgeladen, indem ein Umladestrom über den Kondensator 7 und Widerstand 8 zu fließen beginnt. Schaut man sich die drei überlagerten Kurven aus FIG. 3 genau an, so wird man feststellen, dass der Nulldurchgang, also der stromlose Zustand der Zündspulendrossel 3, gegenüber den Kurven U₁₃₋₁₀ und U₁₃₋₁₁ verzögert ist. Drossel 6 ist bereits durch Strom als Speicher aufgeladen und kann bei einem fehlenden Stromfluss über die Lampe 9 und Zündspule 3 probieren ihre gespeicherte Energie mit Spannungsüberhöhung, die sich der sägezahnähnlichen Spannung von Kurve U₁₃₋₁₀ überlagert, abzugeben.

Der Widerstand 8 dient der Begrenzung des maximalen Spitzenstromes durch die Drossel 6 und verzögert und verbreitert die mögliche Spannungsüberhöhung, die man an der Lampe während der kritischen Phase erzielen kann. Der Kondensator 7 muss eine recht große Kapazität besitzen, die andererseits bei hohen Frequenzen bei der Umladung des Kondensators 7 in die Drossel 6 und dem Widerstand 8 zu Verlusten führt. Die Kapazität ist bei der Schaltungsanordnung mit 15nF dimensioniert. Die Induktivität der zusätzlichen Drossel 6 muss der Größenordnung der Zündspule 3 entsprechen (im konkreten Anwendungsfall: 1mH).
Der Serienschwingkreis muss mit der Dimensionierung zu der gewählten Wechselstromfrequenz die gewünschten Spannungsüberhöhungen liefern.

Ein Überschwingvorgang, wie er gelegentlich und unerwünscht bei Funktionsgeneratoren auftritt, wurde erfindungsgemäß energetisch so stark vergrößert, dass bei hochohmiger Lampe eine hohe Spannungsspitze auf eine sägezahnähnliche Spannung überlagert wird. Einzig zur Begrenzung der Verluste in der Drossel 6 darf man den Wert des Kondensators 7 nicht zu groß wählen.

## Patentansprüche

1. Schaltung zum Erzeugen und Betreiben eines Plasmas in einer Lichtbogenlampe, insbesondere einer Miniatur-Hochdruck-Kurzbogen-Gasentladungslampe, die aus einem geregelten Gleichspannungswandler (DC-DC-Converter), einer Schaltung zum Regeln der Lampenleistung, einem Halbbrückenwechselrichter und einer Zündschaltung (Ignition) besteht, **dadurch gekennzeichnet,**
**dass** der Gleichspannungswandler das Plasma leistungsbezogen regelt und diese geregelte Gleichspannung in Wechselspannung von dem nachgeschalteten Halbbrückenwechselrichter umgewandelt wird, der zusätzliche Schaltungselemente eines Schwingkreises (6,7) und (8) zu der in Serie mit der Lampe liegenden Zündspule (3) aufweist.

2. Schaltung nach Anspruch 1, **dadurch gekennzeichnet, dass** zwei Induktivitäten (3 und 6) in Serie mit einer Gasentladungslampe (9) als Speicher wirken und ein zweiter Schwingkreis über deren Verbindungspunkt (11) mit einem Kondensator (7) und Widerstand (8) gebildet wird, wobei die Serienanordnung des Kondensators (7) und des Widerstandes (8) parallel zur der Serienanordnung aus der Gasentladungslampe (9) und der Zündspule (3) am Anschlusspunkt (13) liegt.

3. Schaltung nach Anspruch 1 oder 2, **dadurch gekennzeichnet, dass** der Serienschwingkreis, bestehend aus den beiden Induktivitäten der Zündspule (3) in Reihe mit der Speicherdrossel (6) sowie im Wechsel mit den Kondensatoren (1 und 2) mit der Halbbrückenschaltung des Wechselrichters (4 und 5), mit einer so hohen Frequenz des Wechselrichters betrieben wird, so dass die Ausgangsspannung des Halbbrückenwechselrichters sägezahnähnliche Halbwellen mit zum Ende abfallender Amplitude aufweisen.

4. Schaltung nach einem der Ansprüche 1- 3, **dadurch gekennzeichnet, dass** die Zündschaltung (Ignition) über den Zündtransformator nur Zündimpulse zum Starten der Lampe und nicht zum Aufrechterhalten des Plasmas bei normalen Betriebsbedingungen überträgt und ausschließlich Spannungsimpulse, entweder durch die gespeicherte Energie der Drossel (6), oder durch die gespeicherte Energie der Zündspule (3) aufgrund der Unterbrechung des Lampenstromflusses über die Sekundärwicklung der Zündspule erzeugt werden.

5. Schaltung nach einem der Ansprüche 1 - 4, **dadurch gekennzeichnet, dass** der DC-DC-Converter nur auf die Regelgröße der von der Lampe aufgenommen Leistung reagiert und die Spannungsüberhöhung zum Wechsel eines jeden Halbwellenimpulses ausschließlich von der Dimensionierung zweier Schwingkreise und der Betriebsfrequenz der Lampe abhängt.

6. Verfahren zum Erzeugen und Betreiben eines Plasmas in einer Lichtbogenlampe, insbesondere einer Miniatur-Hochdruck-Kurzbogen-Gasentladungslampe, die aus einem geregelten Gleichspannungswandler (DC-DC-Converter), einer Schaltung zum Regeln der Lampenleistung, einem Halbbrückenwechselrichter und einer Zündschaltung (Ignition) besteht, **dadurch gekennzeichnet,**
**dass** der Gleichspannungswandler das Plasma leistungsbezogen regelt und diese geregelte Gleichspannung in Wechselspannung von dem nachgeschalteten Halbbrückenwechselrichter umgewandelt wird, der zusätzliche Schaltungselemente eines Schwingkreises (6, 7 und 8) zu der in Serie mit der Lampe liegenden Zündspule (3) aufweist, um bei dem Entladen der Speicherdrossel (6) den Spannungsanstieg einer Halbwelle zu verkürzen, wobei sich die Anfangsspannung stark überhöht.

7. Verfahren nach Anspruch 6, **dadurch gekennzeichnet, dass** zwei Induktivitäten (3 und 6) in Serie mit einer Gasentladungslampe (9) als Speicher wirken und ein zweiter Schwingkreis über deren Verbindungspunkt (11) mit einem Kondensator (7) und Widerstand (8) gebildet wird, wobei die Serienanordnung des Kondensators (7) und des Widerstandes (8) parallel zur der Serienanordnung aus der Gasentladungslampe (9) und der Zündspule (3) am Anschlusspunkt (13) liegt.

8. Schaltung nach Anspruch 6 oder 7, **dadurch gekennzeichnet, dass** der Serienschwingkreis, bestehend aus den beiden Induktivitäten der Zündspule (3) in Reihe mit der Speicherdrossel (6) sowie im Wechsel mit den Kondensatoren (1) und (2) mit der Halbbrückenschaltung des Wechselrichters (4 und 5), mit einer so hohen Frequenz des Wechselrichters betrieben wird, so dass die Ausgangsspannung des Halbbrückenwechselrichters sägezahnähnliche Halbwellen mit zum Ende abfallender Amplitude aufweisen.

9. Verfahren nach einem der Ansprüche 6 - 8, **dadurch gekennzeichnet, dass** die Zündschaltung (Ignition) über den Zündtransformator nur Zündimpulse zum Starten der Lampe und nicht zum Aufrechterhalten des Plasmas bei normalen Betriebsbedingungen überträgt und ausschließlich Spannungsimpulse, entweder durch die gespeicherte Energie der Drossel (6), oder durch die gespeicherte Energie der Zündspule (3) aufgrund der Unterbrechung des Lampenstromflusses über die Sekundärwicklung der Zündspule erzeugt werden.

10. Schaltung nach einem der Ansprüche 6 - 9, **dadurch gekennzeichnet, dass** der DC-DC-Converter nur auf die Regelgröße der von der Lampe aufgenommen Leistung reagiert und die Spannungsüberhöhung zum Wechsel eines jeden Halbwellenimpulses ausschließlich von der Dimensionierung zweier Schwingkreise und der Betriebsfrequenz der Lampe abhängt.
